# EUROPEAN PATENT APPLICATION

(11) **EP 3 223 492 A1**
(43) Date of publication of application: **27.09.2017**
(21) Application number: 17162500.7
(22) Date of filing: 23.03.2017
(51) Int. Cl.: H04L 29/08, H04W 4/04, H04W 4/02

(54) **TERMINAL DEVICE FOR VEHICLE-TO-VEHICLE COMMUNICATION**

(30) Priority: 25.03.2016 JP 2016062320; 16.12.2016 JP 2016244822
(71) Applicant: Panasonic Intellectual Property Management Co., Ltd., Osaka-shi, Osaka 540-6207 (JP)
(72) Inventor: TAKEMURA, Hiroshi, Osaka-shi, Osaka 540-6207 (JP); WATANABE, Hiroyuki, Osaka-shi, Osaka 540-6207 (JP); KOUYAMA, Tadahisa, Osaka-shi, Osaka 540-6207 (JP)
(74) Representative: Grünecker Patent- und Rechtsanwälte PartG mbB

(57) **Abstract**

A terminal device includes an acquisition unit, a transmission unit, a reception unit, and a notification unit. The acquisition unit acquires location information of a vehicle where the terminal device is installed. The transmission unit transmits a communication packet containing the location information, and identification information identifying the terminal device. The reception unit receives a communication packet transmitted from another terminal device installed in another vehicle, the received packet containing the location information of the other vehicle, and acquires this location information. The notification unit performs notification of a warning, based on the location information of the two vehicles. In a case where stop conditions have been satisfied, the transmission unit stops transmission of the communication packet containing the location and the identification information. Even in a case where the stop conditions have been satisfied, the reception unit receives the communication packet transmitted from the other terminal device.

## Description

### BACKGROUND

### 1. Technical Field

The present disclosure relates to communication technology, and particularly relates to a terminal device that transmits and receives signals containing predetermined information.

### 2. Description of the Related Art

In inter-vehicle communication, a terminal device transmits information of its own vehicle (vehicle identification information, current location, direction of travel, vehicle speed, etc.) in the form of communication packets, and shares information with other terminal devices installed in vehicles in the periphery, thereby notifying drivers of other vehicles approaching, and so forth. However, information of the vehicle, such as vehicle identification information, current location, and so forth, continues to be transmitted, so a particular vehicle could be tracked by receiving this information, even though out of sight. Heretofore, vehicle identification information has been changed in a situation where another vehicle is not approaching (e.g., see Japanese Unexamined Patent Application Publication No. 2010-204982).

### SUMMARY

In one general aspect, the techniques disclosed here feature a terminal device including: an acquisition unit that acquires first location information of a subject vehicle in which the terminal device is installed; a transmission unit that transmits a communication packet containing the first location information acquired by the acquisition unit, and identification information for identifying the terminal device; a reception unit that receives a communication packet transmitted from another terminal device installed in another vehicle, the received communication packet containing the second location information of the other vehicle, and acquires the second location information contained in the communication packet; and a notification unit that performs notification of a warning, based on the second location information acquired at the reception unit, and the first location information acquired at the acquisition unit. In a case where stop conditions have been satisfied, the transmission unit stops transmission of the communication packet containing the first location information and the identification information. Even in a case where the stop conditions have been satisfied, the reception unit receives the communication packet transmitted from the other terminal device.

Any combination of the above components, and arrangements where the expression of the present disclosure is substituted among method, device, system, recording medium, computer program, and so forth, are valid aspects of the present disclosure.

According to the present disclosure, tracking a subject vehicle using information contained in communication packets transmitted from a terminal device installed in the subject vehicle, by a terminal device installed in a vehicle tracking the subject vehicle, can be made more difficult.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE DRAWINGS

Fig. 1 is a diagram illustrating the configuration of a communication system according to a first embodiment;
Fig. 2 is a diagram illustrating a frame format stipulated in the communication system in Fig. 1;
Fig. 3 is a diagram illustrating the configuration of a terminal device according to the first embodiment;
Fig. 4 is a diagram illustrating an overview of processing performed by the communication system in Fig. 1;
Fig. 5 is a flowchart illustrating transmission procedures by the terminal device in Fig. 3:
Fig. 6 is a flowchart illustrating other transmission procedures by the terminal device in Fig. 3:
Figs. 7A and 7B are diagrams illustrating an overview of vehicle ID changing processing in an object of comparison in a communication system according to a second embodiment;
Figs. 8A and 8B are diagrams illustrating an overview of vehicle ID changing processing in the communication system according to the second embodiment;
Fig. 9 is a sequence diagram illustrating changing processing in the communication system according to the second embodiment; and
Fig. 10 is a sequence diagram illustrating other changing processing in the communication system according to the second embodiment.

### DETAILED DESCRIPTION

### Underlying Knowledge Forming Basis of the Present Disclosure

Even if vehicle identification information is changed as described in the aforementioned Japanese Unexamined Patent Application Publication No. 2010-204982, another party may be able to perform matching of before and after the change, based on information other than vehicle identification information such as the current position or the like. Further, it is difficult to detect that one is being tracked in a case where a communication device that changes vehicle identification information in a short time, or a communication device that only has reception functions to begin with, is used for tracking. The present disclosure provides technology making tracking that uses information transmitted by terminal devices installed in vehicles more difficult.

### First Embodiment

An overview will be described before describing the present disclosure in detail. A first embodiment of the present disclosure relates to a communication system that executes vehicle-to-vehicle communication between terminal devices installed in vehicles, and road-to-vehicle communication from base station devices installed at intersections and so forth to terminal devices. This sort of communication system is also referred to as an intelligent transport system (ITS). The communication system uses an access control function called carrier sense multiple access with collision avoidance (CSMA/CA) in the same way as a wireless local area network (LAN) compliant with standards such as IEEE 802.11 and so forth. Accordingly, a single wireless channel is shared by multiple terminal devices. On the other hand, an ITS needs to be able to transmit information to many and unspecified terminal devices. The present communication system performs broadcast transmission of communication packets, to efficiently execute such transmission.

One of the vehicles in which the terminal device according to the present embodiment is installed will be referred to as "subject vehicle". Description will be primarily made regarding the operations of the terminal device installed in the subject vehicle in the present embodiment. A vehicle other than the subject vehicle will be referred to as "other vehicle". Terminal devices are also installed in other vehicles as well. The terminal devices installed in the other vehicles may be the same as the terminal device according to the present embodiment, or may be different. To differentiate between the terminal device installed in the subject vehicle from the terminal devices installed in other vehicles, the terminal device installed in the present vehicle may be referred to as "subject terminal device", while the terminal devices installed in other vehicles may be referred to as "other terminal device".

The subject terminal device broadcasts communication packets including position information, such as the position (also referred to as "present location") of the subject vehicle, speed, direction of travel, and so forth, as vehicle-to-vehicle communication. Other terminal devices also receive communication packets from the subject terminal device and recognize whether or not the vehicle in which the subject terminal device is installed is approaching and so forth, based on the information stored in the communication packets. A base station device repeatedly stipulates frames including multiple subframes, to reduce interference between road-to-vehicle communication and vehicle-to-vehicle communication. The base station device selects one of the multiple subframes for vehicle-to-vehicle communication, and performs broadcast transmission of communication packets storing control information and the like, at the leading period of the selected subframe.

Control information includes information relating to a period for the base station device to perform broadcast transmission of communication packets (hereinafter referred to as "road-to-vehicle transmission period"). The terminal device that has received communication packets from the base station device identifies the road-to-vehicle transmission period based on the control information, and performs broadcast transmission of communication packets by CSMA format in a period other than the road-to-vehicle transmission period (hereinafter referred to as "vehicle-to-vehicle transmission period"). As a result, time-division multiplexing is performed for road-to-vehicle communication and vehicle-to-vehicle communication. Note that a terminal device that cannot receive control information from a base station device, i.e., a terminal device existing outside of an area formed by the base station device, performs broadcast transmission of communication packets by CSMA format regardless of frame configuration.

In the above-described state, in a case where assistance execution conditions are satisfied based on information included in the communication packets received from another terminal device or a base station device, the terminal device according to the present invention executes driving assistance. Note that driving assistance is assisting the driver with driving, examples of which include right-turn collision prevention assistance and head-on collision prevention assistance. Right-turn collision prevention assistance is to notify the driver about another vehicle traveling in the other direction when the driver is preparing to make a right turn at an intersection, in a case where cars drive on the left side of the road as in Japan. Head-on collision prevention assistance is to notify the driver about another vehicle when the driver is preparing to drive straight through an intersection but the other vehicle is approaching on a path that intersects the path of this vehicle. Multiple types of driving assistance are stipulated, and known technology may be used.

The subject terminal device performs broadcast transmission of communication packets so that driving assistance is performed at other terminal devices. These communication packets contain identification information for identifying the subject terminal device or subject vehicle (hereinafter also referred to as vehicle Identification (ID)). The subject terminal device has a random number generator that generates random numbers, for example. When the subject terminal device is activated, the subject terminal device uses a random number generated by the random number generator to generate a vehicle ID, for example. Thus, the vehicle ID is randomly set when activating the terminal device 14. However, there is concern that the subject vehicle may be tracked by another vehicle, by another terminal device receiving the communication packets transmitted from the subject terminal device, which has been described earlier. According to the present embodiment, it is more difficult for another vehicle to in which another terminal device is installed to track the subject vehicle by receiving communication packets transmitted from the subject terminal device. In a case where stop conditions set beforehand are satisfied, the subject terminal device stops broadcast transmission of communication packets. Even in this case, however, reception of communication packets is continued to enable execution of driving assistance. On the other hand, in a case where resume conditions set beforehand are satisfied after having stopped transmission of communication packets, the subject terminal device resumes transmission of communication packets. The vehicle ID is changed at this time.

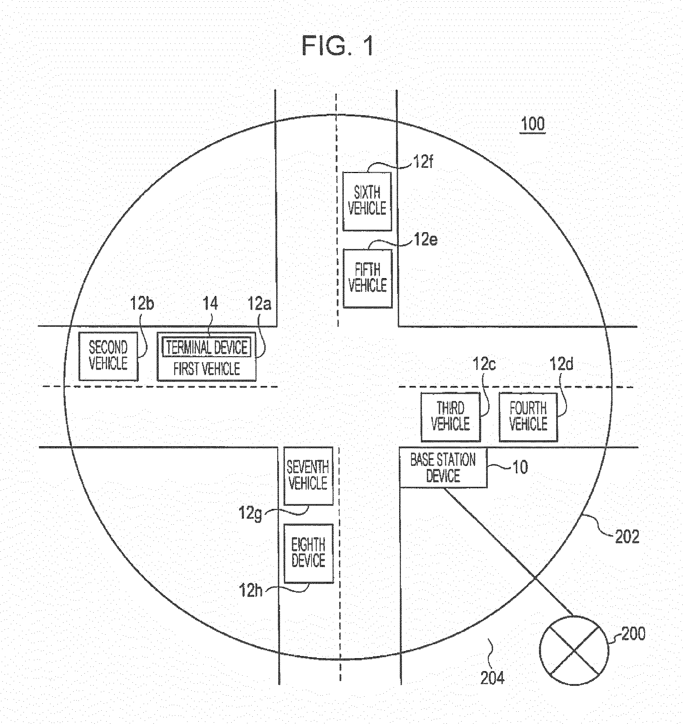

Fig. 1 illustrates a communication system 100 according to the first embodiment of the present disclosure. This corresponds to viewing one intersection from above. The communication system 100 includes a base station device 10, a first vehicle 12a, second vehicle 12b, third vehicle 12c, fourth vehicle 12d, fifth vehicle 12e, sixth vehicle 12f, seventh vehicle 12g, and eighth vehicle 12h, which may be collectively referred to as "vehicle 12", and a network 200. Although only the first vehicle 12a is illustrated as having a terminal device 14 installed therein, it should be understood that the second vehicle 12b through eighth vehicle 12h all have terminal devices 14 installed therein. An area 202 is formed around the base station device 10, and an out-of-area region 204 is formed around the area 202.

In Fig. 1, a road in the horizontal direction, which is the left-and right direction on paper, and a road in the vertical direction, which is the top-and-bottom direction on paper, intersect at the middle. The upper side of Fig. 1 corresponds to the direction "north", the left side corresponds to the direction "west", the lower side corresponds to the direction "south", and the right side corresponds to the direction "east". The portion where the two roads intersect is the "intersection". The first vehicle 12a and second vehicle 12b are advancing from the left toward the right, and the third vehicle 12c and fourth vehicle 12d are advancing from the right to the left. The fifth vehicle 12e and sixth vehicle 12f are advancing from above downwards, and the seventh vehicle 12g and eighth vehicle 12h are advancing from below upwards. An automobile is an example of the vehicle 12.

The base station device 10 in the communication system 100 is installed at an intersection in a fixed manner. The base station device 10 controls communication among terminal devices. The base station device 10 repeatedly generates frames containing multiple subframes, based on signals received from a global positioning system (GPS) satellite omitted from illustration, or frames formed at another base station device 10 omitted from illustration. For example, dividing a 1 second period indicated in signals received from a GPS satellite by 10 yields ten 100 msec frames. Note that a stipulation is given here such that the road-to-vehicle transmission period can be set at the leading portion of each subframe.

Of the multiple subframes in a frame, the base station device 10 selects a subframe regarding which a road-to-vehicle transmission period has not been set by another base station device 10. The base station device 10 sets a road-to-vehicle transmission period at the leading portion of the selected subframe. The base station device 10 performs broadcast transmission of communication packets in the set road-to-vehicle transmission period. A communication packet is configured including control information and a payload. Broadcast transmission of multiple communication packets may be performed in a road-to-vehicle transmission period. Control information includes a subframe No. of the subframe where the road-to-vehicle transmission period has been set, and so forth. The payload includes traffic accident information, congestion information, signal information, and so forth, for example. Such data is acquired from the network 200.

The terminal device 14 is installed in a vehicle 12 and is movable, as described above. Upon receiving a communication packet from the base station device 10, the terminal device 14 estimates that it itself is present within the area 202. In a case where the terminal device 14 is present in the area 202, the terminal device 14 generates frames based on control information contained in the communication packet, and in particular, information relating to the timing at which the road-to-vehicle transmission period has been set and information relating to the frame. Accordingly, the frames generated at each of the multiple terminal devices 14 are synchronous with frames generated by the base station device 10. The terminal device 14 performs broadcast transmission of communication packets in a vehicle-to-vehicle transmission period, which is a period that differs from the road-to-vehicle transmission period. CSMA/CA is carried out during the vehicle-to-vehicle transmission period. On the other hand, in a case where the terminal device 14 estimates that it is present in the out-of-area region 204, the terminal device 14 performs CSMA/CA regardless of frame configuration, and thus performs broadcast transmission of communication packets. The terminal device 14 recognizes other vehicles 12, which have other terminal devices 14 installed, approaching or the like, based on communication packets from other terminal devices 14.

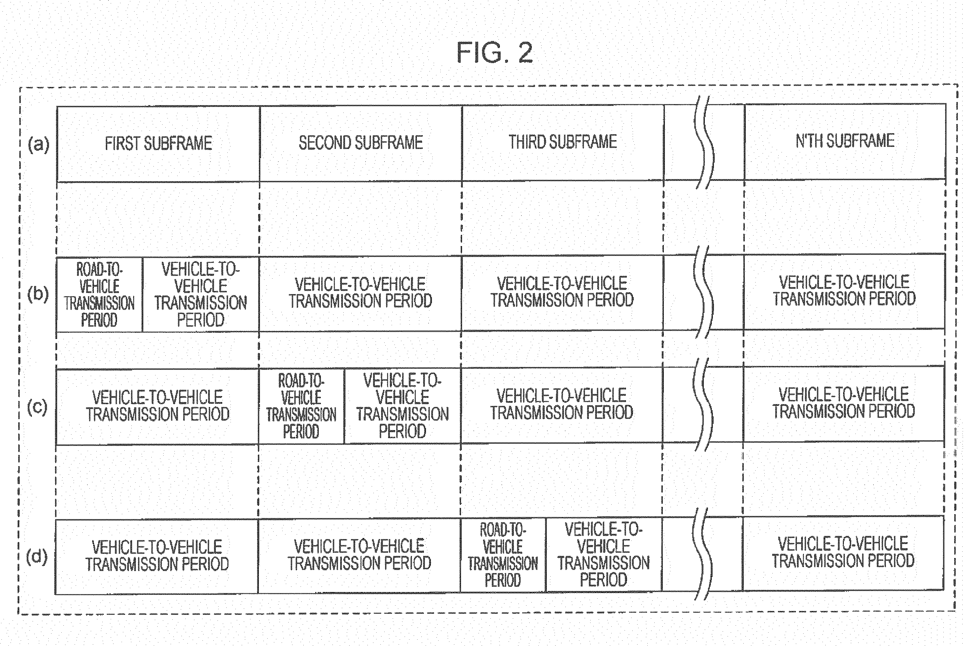

Fig. 2 is a diagram illustrating the format of a frames stipulated in the communication system 100. In Fig. 2, (a) indicates the configuration of a frame. A frame is formed of N subframes, illustrated as a first subframe through an N'th subframe. The frame can be said to be formed by the terminal device 14 performing time-multiplexing of multiple subframes that can be used for broadcast transmission. For example, in a case where the length of a frame is 100 msec and N is 8, subframes that are 12.5 msec in length are stipulated. N may be a number other than 8.

In Fig. 2, (b) illustrates the configuration of a frame generated by a first base station device 10a, omitted from illustration. The first base station device 10a corresponds to any one of the base station devices 10. The first base station device 10a sets a road-to-vehicle transmission period at the leading portion of the first subframe. The road-to-vehicle transmission period is a period during which the base station device 10 can perform broadcast transmission of communication packets. The first base station device 10a also sets a vehicle-to-vehicle transmission period following the road-to-vehicle transmission period in the first subframe. The vehicle-to-vehicle transmission period is a period during which the terminal device 14 can perform broadcast transmission of communication packets. That is to say, the first base station device 10a makes stipulations such that it can perform broadcast transmission of communication packets during the road-to-vehicle transmission period that is the leading period of the first subframe, and such that the terminal device 14 can perform broadcast transmission of communication packets in the vehicle-to-vehicle transmission period of the frame other than the road-to-vehicle transmission period. Further, the first base station device 10a only sets vehicle-to-vehicle transmission periods from the second subframe through the N'th subframe.

In Fig. 2, (c) illustrates the configuration of a frame generated by a second base station device 10b, omitted from illustration. The second base station device 10b sets a road-to-vehicle transmission period at the leading portion of the second subframe. Also, the second base station device 10b sets vehicle-to-vehicle transmission periods in the latter portion of the second subframe following the vehicle-to-vehicle transmission period, the first subframe, and the third subframe through the N'th subframe. In Fig. 2, (d) illustrates the configuration of a frame generated by a third base station device 10c, omitted from illustration. The third base station device 10c sets a road-to-vehicle transmission period at the leading portion of the third subframe. Also, the third base station device 10c sets vehicle-to-vehicle transmission periods in the latter portion of the third subframe following the vehicle-to-vehicle transmission period, the first subframe, the second subframe, and the fourth subframe through the N'th subframe. Thus, multiple base station devices 10 each select different subframes, and set a road-to-vehicle transmission period at the leading portion of the selected subframe.

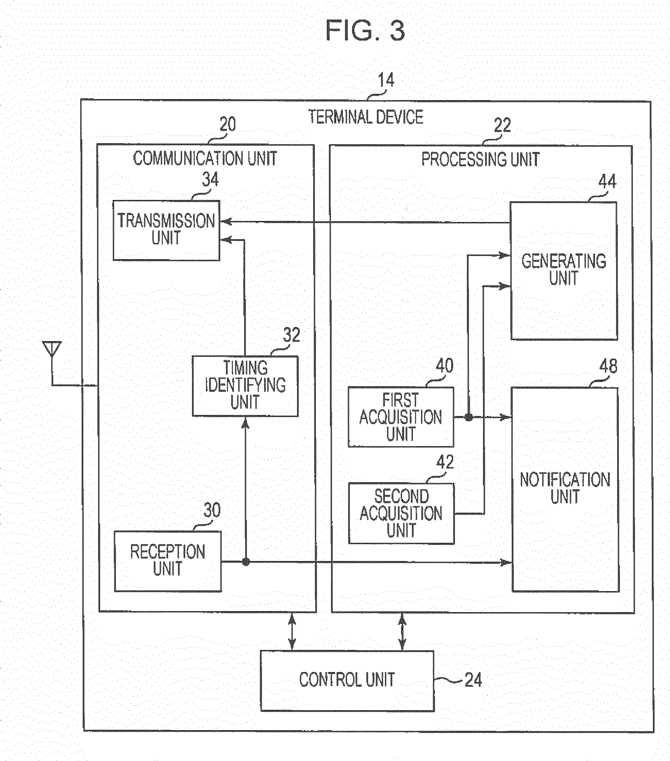

Fig. 3 is a diagram illustrating the configuration of the terminal device 14 according to the first embodiment. The terminal device 14 includes a communication unit 20, a processing unit 22, and a control unit 24. The communication unit 20 includes a reception unit 30, a timing identifying unit 32, and a transmission unit 34. The processing unit 22 includes a first acquisition unit 40, a second acquisition unit 42, a generating unit 44, and a notification unit 48. The terminal device 14 according to the present embodiment that is illustrated in Fig. 3 can be installed in the vehicle 12, as described above.

The reception unit 30 receives signals making up a communication packet from another terminal device 14 that is omitted from illustration, or from the base station device 10 via an antenna. The reception unit 30 performs frequency transform on the wireless frequency signals of the received communication packet, and generates baseband signals for the communication packet. The reception unit 30 demodulates the baseband signals for the communication packet. The communication system 100 uses orthogonal frequency division multiplexing (OFDM), so the reception unit 30 preforms fast Fourier transform (FFT) as well. Moreover, the reception unit 30 outputs the results of the demodulating to the processing unit 22 and the timing identifying unit 32.

In a case where the demodulation results from the reception unit 30 indicate that what has been received is a communication packet from the base station device 10 omitted from illustration, the timing identifying unit 32 identifies the timing of the subframe where the road-to-vehicle transmission period has been situated. At this time, the timing identifying unit 32 estimates that the terminal device 14 is situated within the area 202 in Fig. 1. The timing identifying unit 32 generates a frame synchronized with the frame formed at the base station device 10, based on information included in the communication packet from the base station device 10. On the other hand, when no communication packet from the base station device 10 has been input, the timing identifying unit 32 estimates that the terminal device 14 is in the out-of-area region 204 in Fig. 1.

In a case of having estimated that the terminal device 14 is within the area 202, the timing identifying unit 32 selects a vehicle-to-vehicle transmission period. The timing identifying unit 32 decides the transmission timing by starting CSMA/CA within a vehicle-to-vehicle transmission period. The timing identifying unit 32 decides the transmission timing by executing CSMA/CA without taking the frame configuration into consideration. The timing identifying unit 32 notifies the transmission unit 34 of the decided transmission timing.

The transmission unit 34 subjects data from the processing unit 22 to modulation. The communication system 100 uses OFDM as described above, so the transmission unit 34 executes inverse fast Fourier transform (IFFT) as well. The transmission unit 34 subjects baseband signals for the communication packet, that have been generated thereby, to frequency transform, thereby generating wireless frequency signals of the communication packet. The transmission unit 34 further performs broadcast transmission of the wireless frequency signals of the communication packet from the antenna, at the transmission timing notified from the timing identifying unit 32.

The first acquisition unit 40 includes a GPS receiver, gyroscope, vehicle speed sensor, and so forth, which are omitted from illustration. The first acquisition unit 40 uses data of positioning (also referred to as "measurement") obtained by these to acquire the present location, direction of travel, speed of movement, and so forth (hereinafter collectively referred to as "first location information") of the vehicle 12 in which the subject terminal device 14 is installed (also referred to as "subject vehicle 12"). The present location is indicated by latitude and longitude. The direction of travel is indicated by azimuthal angle, and indicates angles in positive values in the clockwise direction, starting with north as a reference direction (0 degrees). Known technology may be used for this acquisition, so description will be omitted here.

The first acquisition unit 40 may acquire a new first location information, each time the above positioning (also referred to as "measurement") is newly performed. The timing for performing new positioning may be each predetermined time for example, or may be otherwise. In this case, each time a new first location information is acquired, the first acquisition unit 40 may output the newly-acquired first location information to the generating unit 44 and the notification unit.

The first acquisition unit 40 is connected to the turn indicators of the subject vehicle 12, and also acquires information of the direction indicated by the turn indicators (hereinafter referred to as "blinker information"). The first acquisition unit 40 outputs the first location information and blinker information to the generating unit 44 and notification unit 48. The first acquisition unit 40 may also newly acquire blinker information each time first location information is newly acquired. In this case, the first acquisition unit 40 may output the newly-acquired first location information and blinker information to the generating unit 44 and notification unit 48 each time first location information is acquired.

The results of demodulation are output from the reception unit 30, as described above. The results of demodulation include the present location, direction of travel, speed of movement, and so forth, of another vehicle 12 transmitted from another terminal device 14 installed in the other vehicle 12 (hereinafter collectively referred to as "second location information"). The results of demodulation also include a vehicle ID for identifying the other terminal device 14 or the other vehicle 12. The second location information and vehicle ID are input to the notification unit.

The second acquisition unit 42 acquires the vehicle ID corresponding to identification information for identifying the subject terminal device 14 or the subject vehicle 12. The second acquisition unit 42 includes a random number generator that generates random numbers, for example. At the timing of activating the subject terminal device 14, the second acquisition unit 42 generates a vehicle ID using a random number generated by the random number generator. The second acquisition unit 42 may use the random number generated by the random number generator as the vehicle ID. Thus, the second acquisition unit 42 randomly generates a vehicle ID. The second acquisition unit 42 outputs the vehicle ID to the generating unit 44. The second acquisition unit 42 does not change the value of the vehicle ID output to the generating unit 44, unless the terminal device 14 is reactivated, or an instruction is received to change the vehicle ID. The generating unit 44 may store the vehicle ID output from the second acquisition unit 42 in memory that is omitted from illustration.

The notification unit 48 receives the first location information and blinker information from the first acquisition unit 40, and the second location information and vehicle ID from the reception unit 30. In a case where the received information satisfies assistance execution conditions, the notification unit 48 decides to execute assistance. The assistance execution conditions are set for each type of driving assistance. For example, the assistance execution conditions for right-turn collision prevention assistance are (i) that the speed of the subject vehicle 12 is a predetermined speed or lower, (ii) that the left blinker of the subject vehicle 12 is on, (iii) that the positional relationship between the subject vehicle 12 and another vehicle 12 is passing each other in opposite directions, and (iv) that the subject vehicle 12 and the other vehicle 12 will encounter each other within a predetermined amount of time. The assistance execution conditions for head-on collision prevention assistance are (i) that the positional relationship between the subject vehicle 12 and another vehicle 12 is intersecting, and (ii) that the subject vehicle 12 and the other vehicle 12 will encounter each other within a predetermined amount of time. In a case where executing of assistance is decided, the notification unit 48 issues a warning. The warning is notified by at least one of screen and audio.

The generating unit 44 receives the first location information and blinker information output from the first acquisition unit 40, and the vehicle ID output from the second acquisition unit 42. The generating unit 44 generates a communication packet including the received first location information, blinker information, and vehicle ID. The generating unit 44 outputs the generated communication packet to the transmission unit 34. In a case where the vehicle ID output from the second acquisition unit 42 at the timing of the terminal device 14 being activated is stored in memory that is omitted from illustration, the generating unit 44 may read the vehicle ID out from the memory. The generating unit 44 may also receive the vehicle ID from the second acquisition unit 42 at the timing of receiving the first location information. Alternatively, the generating unit 44 may generate a communication packet containing the newly-received first location information, new blinker information, and vehicle ID, each time a new first location information and new blinker information as received from the first acquisition unit 40.

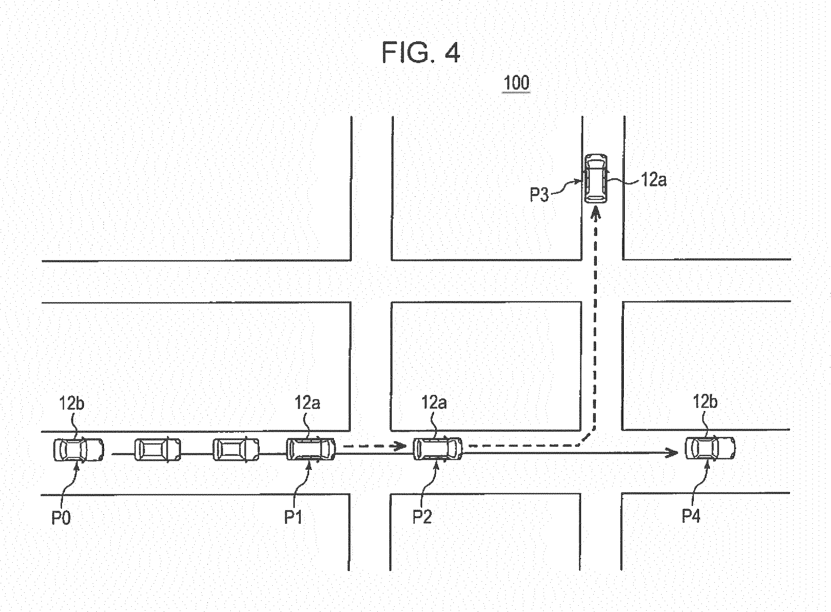

The control unit 24 controls the operations of the communication unit 20 and processing unit 22. Before describing the processing of the control unit 24 in detail, an overview of processing by the communication system 100 to prevent tracking by other vehicles 12 will be described with reference to Fig. 4.

Fig. 4 is a diagram illustrating an over view of processing by the communication system 100. A state where the second vehicle 12b is tracking the first vehicle 12a will be assumed here. The terminal device 14 illustrated in Fig. 3 is installed in both the first vehicle 12a and second vehicle 12b for example, although not illustrated in Fig. 4. The terminal device 14 installed in the first vehicle 12a will be referred to as "subject terminal device 14", and the terminal device 14 installed in the second vehicle 12b will be referred to as "other terminal device 14", in order to distinguish between the terminal devices 14 installed in the first vehicle 12a and second vehicle 12b.

In an initial state, the first vehicle 12a is situated at a point P1 and the second vehicle 12b is situated at a point P0. The subject terminal device 14 performs broadcast transmission of communication packets containing the first location information and the vehicle ID. Note that the blinker information may or may not be included in the communication packets transmitted from the transmission unit 34 of the subject terminal device 14.

On the other hand, the other terminal device 14 receives communication packets from the subject terminal device 14. The other terminal device 14 also identifies the first vehicle 12a based on the first location information and vehicle ID included in the communication packets transmitted from the subject terminal device 14, and the second vehicle 12b in which the other terminal device 14 is installed tracks the first vehicle 12a. When the first vehicle 12a reaches a point P2, the subject terminal device 14 stops the broadcast transmission of the communication packets. Accordingly, the communication packets containing the first location information that the first acquisition unit 40 of the subject terminal device 14 has acquired and the and vehicle ID, are not broadcast by the transmission unit 34 anymore after the point of stopping. Thus, the other terminal device 14 does not receive communication packets from the subject terminal device 14 anymore, and accordingly information contained in communication packets cannot be used to identify the first vehicle 12a anymore. Consequently, it is difficult for the second vehicle 12b to track the first vehicle 12a. As can be seen in Fig. 4, the second vehicle 12b has reached point P4, and thus has failed to track the first vehicle 12a. On the other hand, once the first vehicle 12a has made a left turn and reached point P3, transmission of communication packets containing the first location information acquired by the first acquisition unit 40 of the subject terminal device 14, and vehicle ID, is performed after the point of having reached point P3. Thus, transmission of communication packets by the transmission unit 34 of the subject terminal device 14 is resumed.

In order to realize such processing, the control unit 24 illustrated in Fig. 3 determines whether or not stop conditions have been satisfied. In a case of determining that stop conditions have been satisfied, the control unit 24 instructs the transmission unit 34 to stop transmitting communication packets. The transmission unit 34 that has received this instruction stops transmission of communication packets containing the first location information and vehicle ID. In this case, if a communication packet containing the first location information acquired by the first acquisition unit 40 and vehicle ID is received from the generating unit 44 after having determined that stop conditions have been satisfied, the transmission unit 34 may discard the received communication packet. Accordingly, there is no transmission of communication packets containing the first location information acquired by the first acquisition unit 40 and vehicle ID by the transmission unit 34 after determination has been made that stop conditions have been satisfied.

On the other hand, even in a case where stop conditions have been satisfied, the control unit 24 causes the reception unit 30 to continue to receive communication packets. Accordingly, even in a case where stop conditions have been satisfied, the reception unit 30 continues reception of communication packets, and the notification unit 48 continues to perform assistance execution.

Now, examples of stop conditions will be listed. In a case where any one of the stop conditions has been satisfied, the control unit 24 of the subject terminal device 14 instructs the transmission unit 34 to stop transmission of communication packets, for example.
(1) The control unit 24 includes a timer that is omitted from illustration, and times a period from a predetermined start point using the timer, in a situation where communication packets are being transmitted from the transmission unit 34. In this case, the stop condition is that a timed period is longer than a period set beforehand (a certain period). The certain period is of a fixed length, but may be randomly changed instead of being a fixed length. Accordingly, cases of satisfying this stop condition randomly occur. Timing of the period by the timer of the control unit 24 may be restricted to cases where the speed of the subject vehicle 12 (first vehicle 12a) is no more than a threshold value. Further, timing of the period by the timer of the control unit 24 may be restricted to cases where the same other vehicle 12 is included in an image taken by an imaging device capable of imaging backwards from the first vehicle 12a.
(2) The control unit 24 receives the first location information from the first acquisition unit 40, and measures the distance from a predetermined start point in a state where the transmission unit 34 is transmitting communication packets. In this case, the stop condition is that the measured distance is longer than a distance set beforehand (certain distance). Note that the certain distance is of a fixed length, but may be randomly changed instead of being a fixed length, in the same way as with the certain period.
(3) The control unit 24 confirms the reception state at the reception unit 30 of communication packets transmitted from the other terminal device 14. Note that the other terminal device 14 may be restricted to another terminal device 14 installed in another vehicle 12 (the second vehicle 12b) regarding which the notification unit 48 is performing driving assistance for the driver of the first vehicle 12a. In this case, the stop condition is that this communication packet has not been received for a certain period.
(4) The control unit 24 receives the first location information from the first acquisition unit 40, and also stipulates a predetermined area, such as nearby home, nearby a destination, or the like, for example, beforehand. In this case, the stop condition is that the first vehicle 12a enters or exits this area.
(5) The control unit 24 receives blinker information from the first acquisition unit 40. In this case, the stop condition is that the state of the blinkers changes.
(6) The control unit 24 accepts instructions from the driver via an interface omitted from illustration. In this case, the stop condition is that an instruction from the driver has been accepted.
(7) The control unit 24 confirms the reception state at the reception unit 30 of communication packets from the base station device 10. In this case, the stop condition is that the subject terminal device 14 is in a state of receiving communication packets from the base station device 10, i.e., the first vehicle 12a in which the subject terminal device 14 is installed is present in the area 202 illustrated in Fig. 1. In this case, the stop condition more preferably is that the first vehicle 12a is a vehicle which is the object of drive assistance in the area 202, such as right-turn collision prevention assistance being performed through road-to-vehicle communication from the base station device 10. Accordingly, drive assistance is performed such as right-turn collision prevention assistance road-to-vehicle communication from the base station device 10, so the effects of stopping transmission can be minimized.

In a case where the determination is made that stop conditions have been satisfied, the control unit 24 further determines whether or not resume conditions have been satisfied. In a case where the control unit 24 has determined that stop conditions have been satisfied, the transmission unit 34 is in a state where communication packet transmission of the first location information and vehicle ID is stopped.

It is in this condition that the control unit 24 determines whether or not that resume conditions have been satisfied. In a case where determination is made that resume conditions have been satisfied, the control unit 24 instructs the transmission unit 34 to resume communication packet transmission. The transmission unit 34 that has received the instruction determines that resume conditions have been satisfied, and performs broadcast transmission of communication packets received from the generating unit 44. The communication packets received from the generating unit 44 include the first location information acquired by the first acquisition unit 40, and the vehicle ID, after having determined that resume conditions have been satisfied. Thus, transmission of communication packets by the transmission unit 34 of the subject terminal device 14 is resumed after determination is made that resume conditions have been satisfied.

In a case where the control unit 24 of the subject terminal device 14 has determined that resume conditions have been satisfied, the second acquisition unit 42 may be instructed to change the vehicle ID. The second acquisition unit 42 that has received the instruction newly generates a vehicle ID using a random number newly generated by the random number generator. Alternatively, the newly generated random number may be used as the vehicle ID. Thus, the vehicle ID is changed. The second acquisition unit 42 outputs the changed vehicle ID to the generating unit 44. Note that upon having received the changed vehicle ID from the second acquisition unit 42, the generating unit 44 may store the changed vehicle ID in memory that is omitted from illustration of the subject terminal device 14. Upon having received the first location information from the first acquisition unit 40, the generating unit 44 may read out the changed vehicle ID from the memory, and generate a communication packet containing the first location information and the changed vehicle ID. The generating unit 44 outputs the generated communication packet to the transmission unit 34 of the terminal device 14. The transmission unit 34 performs broadcast transmission of the communication packet received from the generating unit 44. Thus, the vehicle ID is changed after determination having been made that resume conditions have been satisfied.

Now, examples of resume conditions will be listed. In a case where any one of the resume conditions has been satisfied, the control unit 24 of the subject terminal device 14 instructs the transmission unit 34 to resume transmission of communication packets, for example.
(A) The control unit 24 includes a timer that is omitted from illustration, and times a period from the transmission unit 34 having stopped communication packet transmission. In this case, the resume condition is that a timed period is longer than a certain period.
(B) The control unit 24 inputs the first location information from the first acquisition unit 40, and measures the distance from where the transmission unit 34 has stopped transmitting communication packets. In this case, the resume condition is that the measured distance is longer than a certain distance. Further, the control unit 24 may input the first location information from the first acquisition unit 40, and measure an accumulated value of change in the azimuthal angle in the direction of travel after the transmission unit 34 having stopped transmission of communication packets. In this case, the measured accumulated value exceeding a certain value is added to the resume conditions.
(C) The control unit 24 inputs the first location information from the first acquisition unit 40, and references map data. In this case, the resume condition is that the attribute of the road being traveled has changed, such as having traveled a certain distance after having passed an Electronic Toll Collection system (ETC) gate, for example.
(D) In the same way as in (4) described above, the control unit 24 inputs the first location information from the first acquisition unit 40, and also stipulates a predetermined area, such as nearby home, nearby a destination, or the like, for example, beforehand. In this case, if the stop condition is that the first vehicle 12a enters this area, the resume condition is that the first vehicle 12a exits this area. If the stop condition is that the first vehicle 12a exits this area, the resume condition is that the first vehicle 12a enters this area.
(E) The control unit 24 accepts instructions from the driver via an interface omitted from illustration. In this case, the resume condition is that an instruction from the driver has been accepted.
(F) In conjunction with (7) described above, the control unit 24 confirms the reception state at the reception unit 30 of communication packets from the base station device 10. In this case, the resume condition is that the first vehicle 12a is in a state of not receiving communication packets from the base station device 10, i.e., the first vehicle 12a in which the subject terminal device 14 is installed is not present in the area 202 illustrated in Fig. 1 (i.e., is in the out-of-area region 204).

Although an example has been described where the control unit 24 determines whether or not stop conditions have been satisfied, and in a case where determination is made that stop conditions have been satisfied, the control unit 24 instructs the transmission unit 34 to stop transmission of communication packets. However, this example is not restrictive. For example, in a case of having determined that stop conditions have been satisfied, the control unit 24 may instruct the generating unit 44 to stop generating communication packets. The generating unit 44 that has received the instruction stops generating communication packets containing the first location information acquired by the first acquisition unit 40 and the vehicle ID. Thus, after determination is made that stop conditions have been satisfied, communication packets containing the first location information acquired by the first acquisition unit 40 and the vehicle ID are not generated. Accordingly, the generating unit 44 stops output of communication packets to the transmission unit 34. As a result, the transmission unit 34 stops transmission of communication packets. Thus, transmission of communication packets by the transmission unit 34 of the subject terminal device 14 is stopped after determination is made that stop conditions have been satisfied.

In a case where the determination is made that resume conditions have been satisfied after having determined whether or not stop conditions have been satisfied, the control unit 24 instructs the generating unit 44 to start generating communication packets. After determination that resume conditions have been satisfied, the generating unit 44 that has received the instruction generates a communication packet containing the first location information received from the first acquisition unit 40 and the vehicle ID, and outputs the generated communication packet to the transmission unit 34. The transmission unit 34 performs broadcast transmission of the received communication packet. Thus, transmission of communication packets by the transmission unit 34 of the subject terminal device 14 is resumed after determination is made that resume conditions have been satisfied.

With regard to hardware arrangements, this configuration can be realized by a central processing unit (CPU) of any computer, memory, or other large scale integration (LSI), and can be realized with regard to software arrangements by programs or the like loaded to memory. Description is made here by way of functional blocks that are realized by collaboration of both. Accordingly, one skilled in the art will understand that various forms of the functional blocks can be realized by hardware alone, and by combinations of hardware and software.

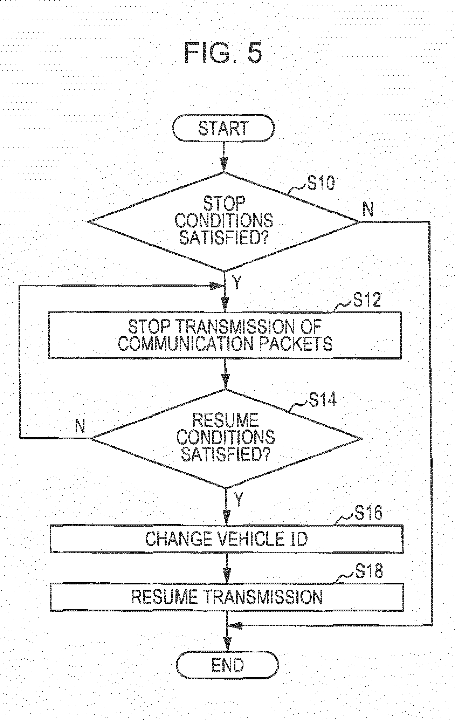

The operations of the communication system 100 according to the above-described configuration will be described. Fig. 5 is a flowchart illustrating an example of transmission procedures by the terminal device 14 in Fig. 3. Specifically, Fig. 5 is a flowchart illustrating an example of transmission procedures by the subject terminal device 14 installed in the subject vehicle 12. The control unit 24 first determines whether or not stop conditions have been satisfied (S10). In a case where determination is made that stop conditions have been satisfied (Y in S10), the control unit 24 instructs the transmission unit 34 to stop communication packet transmission. The transmission unit 34 that has received this instruction stops communication packet transmission (S12). The control unit 24 then determines whether or not resume conditions have been satisfied (S14). In a case where the control unit 24 determines that resume conditions have not been satisfied (N in S14), the flow returns to step S12.

In a case where determination is made that resume conditions have been satisfied (Y in S14), the control unit 24 instructs the second acquisition unit 42 to change the vehicle ID. The second acquisition unit 42 that has received this instruction changes the vehicle ID, and outputs the changed vehicle ID to the generating unit 44 (S16). The control unit 24 also instructs the transmission unit 34 to resume communication packet transmission. The transmission unit 34 that has received this instruction resumes communication packet transmission (S18). In a case where determination is made by the control unit 24 that stop conditions have not been satisfied (N in S10), steps S12 through S18 are skipped.

In the description made so far, in a case where determination is made that stop conditions have been satisfied, the control unit 24 either instructs the transmission unit 34 to stop communication packet transmission, or instructs the generating unit 44 to stop generating communication packets. Alternatively, in a case where determination is made that stop conditions have been satisfied, the control unit 24 may instruct the first acquisition unit 40 to output dummy location information to the generating unit 44, instead of the first location information. The first acquisition unit 40 that has received this instruction outputs dummy location information to the generating unit 44 instead of the first location information. The dummy location information may be stored in memory that is omitted from illustration, in the subject terminal device 14, for example. In a case where stop conditions have been satisfied, the first acquisition unit 40 acquires the dummy location information from the memory, and outputs to the generating unit 44, for example. Dummy location information is a location that is different from the present location in the first location information, or a location indicated by an invalid value. Also, in a case where the control unit 24 instructs the first acquisition unit 40 to output dummy location information, the control unit 24 instructs the second acquisition unit 42 to change the vehicle ID. Changing of the vehicle ID by the second acquisition unit 42 is the same as described above, so description will be omitted here.

Consequently, the generating unit 44 generates a communication packet containing the dummy location information received from the first acquisition unit 40, and the changed vehicle ID received from the second acquisition unit 42. The generating unit 44 outputs the generated communication packet to the transmission unit 34. The transmission unit 34 performs broadcast transmission of the communication packet received from the generating unit 44. Accordingly, in a case where stop conditions have been satisfied, what the transmission unit 34 is doing is substantially the same as having stopped transmission of communication packets containing the first location information and vehicle ID.

Although description has been made above that, in a case where determination is made that stop conditions have been satisfied, the control unit 24 instructs the second acquisition unit 42 to change the vehicle ID, this is not restrictive. For example, the control unit 24 may instruct the second acquisition unit 42 to change the vehicle ID in a case where determination is made that resume conditions have been satisfied. In this case, the communication packet containing the dummy location information also contains the vehicle ID prior to changing. The vehicle ID before changing is the vehicle ID that the second acquisition unit 42 generated when the subject terminal device 14 was activated, for example. Note that the vehicle ID may or may not be included in the communication packet containing the dummy location information.

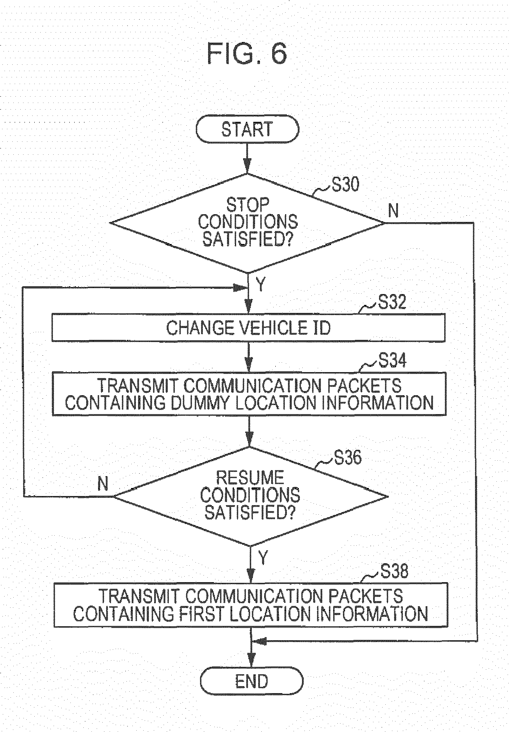

Operations of the communication system 100 according to the above configuration will be described. Fig. 6 is a flowchart illustrating another example of transmission procedures by the terminal device 14. The control unit 24 of the subject terminal device 14 determines whether or not stop conditions have been satisfied (S30). In a case of having determined that stop conditions have been satisfied (Y in S30), the control unit 24 instructs the first acquisition unit 40 to output dummy location information. The first acquisition unit 40 that has received this instruction outputs the dummy location information to the generating unit 44 instead of the first location information. The control unit 24 also instructs the second acquisition unit 42 to change the vehicle ID. The second acquisition unit 42 that has received this instruction changes the vehicle ID, and outputs the changed vehicle ID to the generating unit 44 (S32). The generating unit 44 generates a communication packet containing the dummy location information received from the first acquisition unit 40 and the changed vehicle ID received from the second acquisition unit 42, and outputs the generated communication packet to the transmission unit 34. The transmission unit 34 then performs broadcast transmission of the communication packet containing the dummy location information (S34).

The control unit 24 determines whether or not resume conditions have been satisfied. In a case where determination is made that resume conditions have not been satisfied (N in S36), the flow returns to step S32. In a case where determination is made that resume conditions have been satisfied (Y in S36), the control unit 24 instructs output of the first location information. The first acquisition unit 40 that has received this instruction outputs to the generating unit 44 the first location information acquired by the first acquisition unit 40 by measuring, instead of the dummy location information. The generating unit 44 generates a communication packet containing the first location information and the vehicle ID, and outputs to the transmission unit 34. The transmission unit 34 performs broadcast transmission of the communication packet received from the generating unit 44 (S38). In a case where determination is made by the control unit 24 that resume conditions have not been satisfied (N in S30), steps S32 through S38 are skipped.

According to the present disclosure, the terminal device installed in the subject vehicle stops transmission of communication packets containing the first location information and vehicle ID in a case where stop conditions have been satisfied. Accordingly, in a case where stop conditions have been satisfied, the first location information acquired by the first acquisition unit can be kept from being notified to other terminal devices. This can make it difficult for another terminal device to receive information (in this example, the first location information and vehicle ID) transmitted from the terminal device installed in the subject vehicle, and use the received information for the vehicle in which the terminal device is installed to track the subject vehicle. Also, in a case where the control unit determines that stop conditions have been satisfied, broadcast transmission of communication packets containing dummy location information instead of the first location information is performed, so the first location information acquired by actual positioning can be kept from being notified to other terminal devices.

Also, in a case where determination is made by the control unit that the resume conditions have been satisfied, broadcast transmission of the communication packets containing the first location information acquired by the first acquisition unit and the vehicle ID is performed from the transmission unit after this determination. Thus, drive assistance can be executed at other terminal devices installed in vehicles other than a vehicle tracking the subject vehicle. Also, in a case where the control unit determines that resume conditions have been satisfied, the vehicle ID is changed, making tracking even more difficult. Further, tracking using information contained in packet information that the terminal device installed in the subject vehicle performs broadcast transmission of becomes even more difficult, so abuse of the communication system can be suppressed. Also, in a case where the control unit has determined that stop conditions have been satisfied, the first location information is not notified, so tracking can be prevented even in a case where another terminal device installed in another vehicle is not transmitting its vehicle ID.

### Second Embodiment

Next, a second embodiment will be described. The second embodiment relates to a system that executes vehicle-to-vehicle communication among terminal devices installed in vehicles and executes road-to-vehicle communication from base station devices installed at intersections or the like to terminal devices, in the same way as in the first embodiment. In this arrangement as well, another terminal device installed in a vehicle tracking a subject vehicle receives broadcast transmission of communication packets from the terminal device installed in the subject vehicle, and tracks the subject vehicle using the information contained in the received communication packets. According to the present embodiment, tracking of the subject vehicle is more difficult.

Even if the subject terminal device changes the vehicle ID, there is a risk that the vehicle in which the terminal device 14 of which the has been changed will be re-identified, unless the vehicle IDs transmitted from other terminal devices installed in other vehicles around the subject vehicle are changed. In order to deal with this, when a terminal device installed in one vehicle changes the vehicle ID, the vehicle IDs of other terminal devices installed in other vehicles near the vehicle are also changed in the second embodiment. The communication system 100 and terminal devices 14 in the second embodiment are the same as those illustrated in Figs. 1 and 3. Description will primarily be made regarding points of difference from the first embodiment.

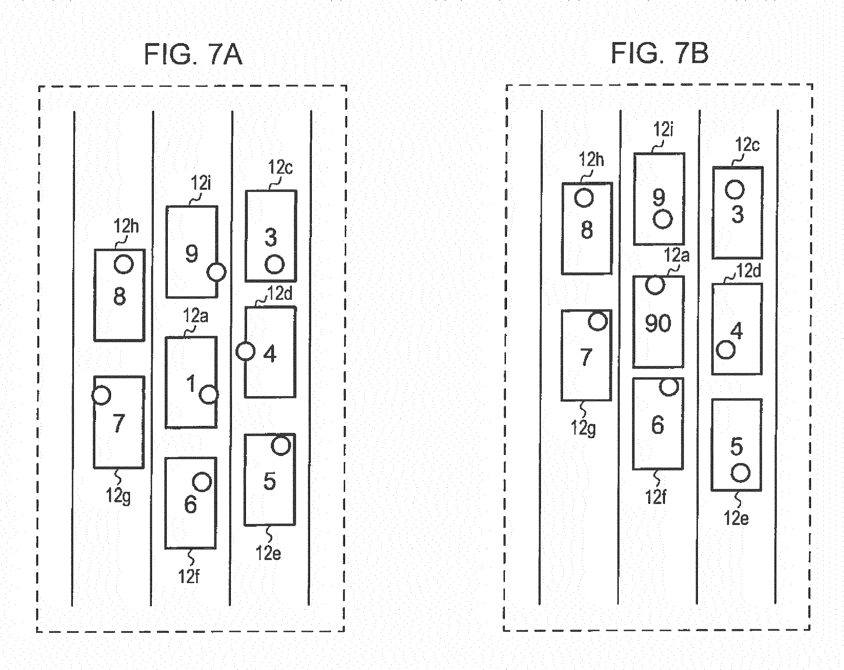

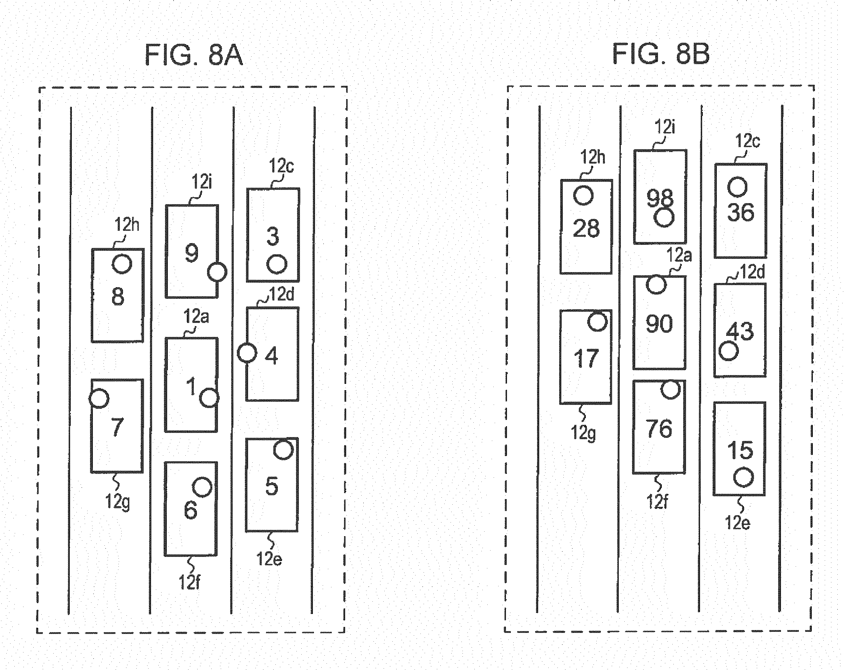

Issues to be addressed in the present embodiment will be described with reference to Figs. 7A and 7B, and an overview of the present embodiment will be described with reference to Figs. 8A and 8B. Fig. 7A illustrates vehicle IDs before performing vehicle ID changing processing, in a comparative example. The first vehicle 12a and the third vehicle 12c through the ninth vehicle 12i described with reference to Figs. 7A through 8B are assumed to be stationary. The terminal devices 14 installed in the first vehicle 12a and the third vehicle 12c through the ninth vehicle 12i are assumed to be at least activated at this time. Although not illustrated in Figs. 7A through 8B, the second vehicle 12b is tracking the first vehicle 12a, for example. The first vehicle 12a and the third vehicle 12c through the ninth vehicle 12i stop near to each other, as illustrated in Figs. 7A through 8B. The vehicle ID set to the terminal device 14 (omitted from illustration) of the first vehicle 12a, for example, is indicated on the vehicle 12 as "1". Fig. 7B is a diagram illustrating the vehicle ID after having performed vehicle ID changing processing in the comparative example. Just the terminal device 14 installed in the first vehicle 12a changes the vehicle ID from "1" to "90", as illustrated in Fig. 7B. The vehicle IDs of the other terminal devices 14 installed in the third vehicle 12c through the ninth vehicle 12i are not changed, as illustrated in Fig. 7B. The other terminal device 14 installed in the second vehicle 12b that is omitted from illustration can readily correlate the vehicle ID before changing with the vehicle ID after changing in the example in Figs. 7A and 7B, so all it needs to do is to identify that the vehicle of which the vehicle ID has been changed is the first vehicle 12a. Accordingly, there is a risk that the first vehicle 12a will be re-identified by the other terminal device 14 installed in the second vehicle 12b tracking the first vehicle 12a.

Figs. 8A and 8B are diagrams illustrating an overview of vehicle ID changing processing in the communication system 100. Fig. 8A is a diagram illustrating the vehicle IDs before performing vehicle ID changing processing in the communication system 100, and is the same as Fig. 7A. Fig. 8B is a diagram illustrating vehicle IDs after having performed vehicle ID changing processing in the communication system 100 according to the present embodiment. In a case of the terminal device 14 installed in the first vehicle 12a changing the vehicle ID, the vehicle ID is also changed in the other terminal devices 14 installed in the third vehicle 12c through ninth vehicle 12i as well. The vehicle IDs of the third vehicle 12c through ninth vehicle 12i stopped around the first vehicle 12a are changed in addition to the first vehicle 12a. Accordingly, it becomes difficult for the terminal device 14 installed in the other vehicle tracking the first vehicle 12a to correlate the vehicle ID before change and the vehicle ID after change. Consequently, the first vehicle 12a is less readily identified by the other terminal device 14 installed in the second vehicle 12b tracking the first vehicle 12a.

An example of vehicle ID changing processing described with reference to Figs. 8A and 8B will be described. An example of realization using vehicle-to-vehicle communication will be described here. To facilitate description, the third vehicle 12c and the fourth vehicle 12d stopped nearby the first vehicle 12a are assumed to be situated within the area 202 illustrated in Fig. 1. This means that the terminal devices 14 installed in the first vehicle 12a, third vehicle 12c, and fourth vehicle 12d can receive broadcast transmission of communication packets from the base station device 10. This also means that the base station device 10 can receive broadcast transmission of communication packets from the terminal device 14 installed in the first vehicle 12a.

In the following description, the terminal device 14 installed in the first vehicle 12a will be referred to as "first terminal device 14a". The terminal device 14 installed in the third vehicle 12c will be referred to as "third terminal device 14c", and the terminal device 14 installed in the fourth vehicle 12d will be referred to as "fourth terminal device 14d".

First, the generating unit 44 of the first terminal device 14a generates a communication packet containing a change request, and the transmission unit 34 of the first terminal device 14a performs broadcast transmission of the communication packet containing the change request. Upon the base station device 10 receiving the communication packet containing the change request from the first terminal device 14a using its own reception functions, the base station device 10 generates a communication packet containing a stop instruction, and performs broadcast transmission of the communication packet containing a stop instruction.

Upon having received the communication packet containing the stop instruction from the base station device 10, the reception unit 30 of the first terminal device 14a outputs the stop information contained in the communication packet to the control unit 24 of the first terminal device 14a. Upon receiving the stop instruction output from the reception unit 30 of the first terminal device 14a, the control unit 24 of the first terminal device 14a determines that stop conditions have been satisfied. The control unit 24 of the first terminal device 14a instructs the transmission unit 34 of the first terminal device 14a to stop broadcast transmission of communication packets. The transmission unit 34 of the first terminal device 14a that has received this instruction stops broadcast transmission of communication packets. Accordingly, upon receiving a communication packet containing a stop instruction from the base station device 10, the first terminal device 14a stops broadcast transmission of communication packets.

The third terminal device 14c also receives the communication packet containing the stop instruction from the base station device 10, in the same way as the first terminal device 14a. Upon having received the communication packet containing the stop instruction from the base station device 10, the reception unit 30 of the third terminal device 14c outputs the stop instruction contained in the communication packet to the control unit 24 of the third terminal device 14c. Upon receiving the stop instruction output from the reception unit 30 of the first terminal device 14a, the control unit 24 of the third terminal device 14c determines that stop conditions have been satisfied. The control unit 24 of the third terminal device 14c instructs the transmission unit 34 of the third terminal device 14c to stop broadcast transmission of communication packets, for example. The transmission unit 34 of the third terminal device 14c that has received this instruction stops broadcast transmission of communication packets.

The operations in a case of the fourth terminal device 14d receiving the communication packet containing the stop instruction from the base station device 10 are the same as the operations of the third terminal device 14c. Accordingly, the above description can be applied here by substituting "third terminal device 14c" with "fourth terminal device 14d", so description will be omitted. The first terminal device 14a, third terminal device 14c, and fourth terminal device 14d each stop broadcast transmission of communication packets upon receiving the communication packet containing the stop instruction from the base station device 10.

Subsequently, the base station device 10 performs broadcast transmission of a communication packet containing a resume instruction. Upon receiving the communication packet containing the resume instruction from the base station device 10, the reception unit 30 of the first terminal device 14a outputs the resume instruction contained in the communication packet to the control unit 24 of the first terminal device 14a. Upon receiving the resume instruction output from the reception unit 30 of the first terminal device 14a, the control unit 24 of the first terminal device 14a determines that resume conditions have been satisfied. The control unit 24 of the first terminal device 14a instructs changing of the vehicle ID to the second acquisition unit 42 of the first terminal device 14a, for example. The second acquisition unit 42 of the first terminal device 14a that has received this instruction changes the vehicle ID. The control unit 24 of the first terminal device 14a instructs the transmission unit 34 of the first terminal device 14a to resume broadcast transmission of communication packets, for example. The transmission unit 34 of the first terminal device 14a that has received this instruction performs broadcast transmission of communication packets containing the first location information acquired by the first acquisition unit 40 of the first terminal device 14a after having received the instruction, and the changed vehicle ID.

Upon receiving the communication packet containing the resume instruction from the base station device 10, the reception unit 30 of the third terminal device 14c outputs the resume instruction contained in the communication packet to the control unit 24 of the third terminal device 14c. Upon receiving the resume instruction output from the reception unit 30 of the third terminal device 14c, the control unit 24 of the third terminal device 14c determines that resume conditions have been satisfied. The control unit 24 of the third terminal device 14c instructs changing of the vehicle ID to the second acquisition unit 42 of the third terminal device 14c, for example. The second acquisition unit 42 of the third terminal device 14c that has received this instruction changes the vehicle ID. The control unit 24 of the third terminal device 14c instructs the transmission unit 34 of the third terminal device 14c to resume broadcast transmission of communication packets, for example. The transmission unit 34 of the third terminal device 14c that has received this instruction performs broadcast transmission of communication packets containing the second location information acquired by the first acquisition unit 40 of the third terminal device 14c after having received the instruction, and the changed vehicle ID.

The operations in a case of the fourth terminal device 14d receiving the communication packet containing the resume instruction from the base station device 10 are the same as the operations of the third terminal device 14c. Accordingly, the above description can be applied here by substituting "third terminal device 14c" with "fourth terminal device 14d", so description will be omitted. The first terminal device 14a, third terminal device 14c, and fourth terminal device 14d each resume broadcast transmission of communication packets upon receiving the communication packet containing the resume instruction from the base station device 10.

In the above-described example, the first terminal device 14a, third terminal device 14c, and fourth terminal device 14d, which have received the communication packet containing the resume instruction from the base station device 10, each change their vehicle ID. That is to say, the vehicle ID is changed at the first terminal device 14a, and the vehicle ID also is changed at the third terminal device 14c. This makes it more difficult for the other terminal device 14 installed in the second vehicle 12b tracking the first vehicle 12a to identify the vehicle ID of the first vehicle 12a.

Further, the vehicle ID changing processing illustrated in Figs. 8A and 8B can also be realized using vehicle-to-vehicle communication alone. To facilitate description, the third vehicle 12c and the fourth vehicle 12d are assumed to be stopped nearby the first vehicle 12a. The third terminal device 14c installed in the third vehicle 12c and the fourth terminal device 14d installed in the fourth vehicle 12d are each assumed to be within a range where broadcast transmission of communication packets from the first terminal device 14a can be received.

First, the control unit 24 of the first terminal device 14a determines whether or not stop conditions have been satisfied. In a case of determining that stop conditions have been satisfied, the control unit 24 of the first terminal device 14a instruct the generating unit 44 to generate a communication packet containing a change instruction. A change instruction is an instruction to change identification information (vehicle ID) that identifies other terminal devices 14 or other vehicles 12 in which are installed other terminal devices 14.

The generating unit 44 of the first terminal device 14a that has received the instruction generates a communication packet containing the change instruction, and outputs to the transmission unit 34 of the first terminal device 14a. The transmission unit 34 of the first terminal device 14a performs broadcast transmission of the communication packet received from the generating unit 44 of the first terminal device 14a. Thus, broadcast transmission of the communication packet containing the change instruction is performed.

After the transmission unit 34 of the first terminal device 14a performs broadcast transmission of the communication packet containing the change instruction, the control unit 24 of the first terminal device 14a instructs the transmission unit 34 of the first terminal device 14a to stop transmission of communication packets. The transmission unit 34 of the first terminal device 14a that has received this instruction stops transmission of communication packets received from the generating unit 44.

The third terminal device 14c receives the communication packet containing the change instruction from the first terminal device 14a. The reception unit 30 of the third terminal device 14c outputs the change instruction contained in the communication packet to the control unit 24 of the third terminal device 14c. Upon receiving the change instruction output from the reception unit 30 of the third terminal device 14c, the control unit 24 of the third terminal device 14c determines that change conditions have been satisfied. The control unit 24 of the third terminal device 14c then instructs the transmission unit 34 of the third terminal device 14c to stop broadcast transmission of communication packets, for example. Upon having received this instruction, the transmission unit 34 of the third terminal device 14c then stops broadcast transmission of the communication packet containing the second location information that the first acquisition unit 40 of the third terminal device 14c has acquired and the vehicle ID. Thus, upon receiving a communication packet containing a change instruction from the first terminal device 14a, the third terminal device 14c stops broadcast transmission of communication packets.

The operations in a case of the fourth terminal device 14d receiving the communication packet containing the change instruction from the first terminal device 14a are the same as the operations of the third terminal device 14c. Accordingly, the above description can be applied here by substituting "third terminal device 14c" with "fourth terminal device 14d", so description will be omitted. Thus, upon broadcast transmission of communication packets being stopped at the first terminal device 14a, broadcast transmission of communication packets is stopped at each of the third terminal device 14c and fourth terminal device 14d as well.

Thereafter, the control units 24 of the first terminal device 14a, third terminal device 14c, and fourth terminal device 14d, each determine whether or not resume conditions have been satisfied. For example, in a case where the control unit 24 of the first terminal device 14a determines that resume conditions have been satisfied, the control unit 24 of the first terminal device 14a instructs the second acquisition unit 42 of the first terminal device 14a to change the vehicle ID, for example. The second acquisition unit 42 of the first terminal device 14a that has received the instruction changes the vehicle ID. The control unit 24 of the first terminal device 14a also instructs the transmission unit 34 of the first terminal device 14a to resume broadcast transmission of communication packets, for example. The transmission unit 34 of the first terminal device 14a that has received this instruction performs broadcast transmission of communication packets containing the first location information acquired by the first acquisition unit 40 of the first terminal device 14a after having received the instruction, and the changed vehicle ID. Accordingly, broadcast transmission of communication packets by the first terminal device 14a is resumed.

In a case where the control unit 24 of the third terminal device 14c determines that resume conditions have been satisfied, the control unit 24 of the third terminal device 14c instructs the second acquisition unit 42 of the third terminal device 14c to change the vehicle ID, for example. The second acquisition unit 42 of the third terminal device 14c that has received this instruction changes the vehicle ID. The control unit 24 of the third terminal device 14c also instructs the transmission unit 34 of the third terminal device 14c to resume broadcast transmission of communication packets, for example. The transmission unit 34 of the third terminal device 14c that has received this instruction performs broadcast transmission of communication packets containing the second location information acquired by the first acquisition unit 40 of the third terminal device 14c after having received the instruction, and the changed vehicle ID. Accordingly, broadcast transmission of communication packets by the third terminal device 14c is resumed.

The operations of the fourth terminal device 14d in a case of the control unit 24 of the fourth terminal device 14d determining that resume conditions have been satisfied are the same as the operations of the third terminal device 14c. Accordingly, the above description can be applied here by substituting "third terminal device 14c" with "fourth terminal device 14d", so description will be omitted. Thus, upon the vehicle ID being changed at the first terminal device 14a, the vehicle IDs are also changed at the third terminal device 14c and fourth terminal device 14d.

For example, a case will be assumed where the resume condition is that a predetermined amount of time has elapsed from having stopped transmission of communication packets. In this case, when the resume condition is satisfied after transmission of communication packets has been stopped over the predetermined period at each of the first terminal device 14a, third terminal device 14c, and fourth terminal device 14d, the control units 24 of each of the first terminal device 14a, third terminal device 14c, and fourth terminal device 14d instruct the respective second acquisition units 42 to change the vehicle IDs, and instruct their transmission units 34 to resume transmission of communication packets. Accordingly, the vehicle IDs contained in the communication packets are changed.

In the above-described processing, the control unit 24 of the first terminal device 14a performs determination regarding whether or not stop conditions have been satisfied, and in a case where determination is made that stop conditions have been satisfied, preforms broadcast transmission of a communication packet containing a change request or a change instruction. Determination of stop conditions are the same as in the first embodiment, so description will be omitted here.

Further, stop conditions may include, in addition to the stop conditions according to the first embodiment, the same vehicle ID being contained in communication packets from a nearby position (e.g., within a range of several meters from the first vehicle 12a) over a predetermined amount of time. According to this arrangement, the first terminal device 14a and nearby other terminal devices 14 can stop transmission of communication packets at approximately the same time. Further, the first terminal device 14a and the nearby third terminal device 14c and fourth terminal device 14d can each change vehicle IDs and resume broadcast transmission of communication packets at approximately the same time.

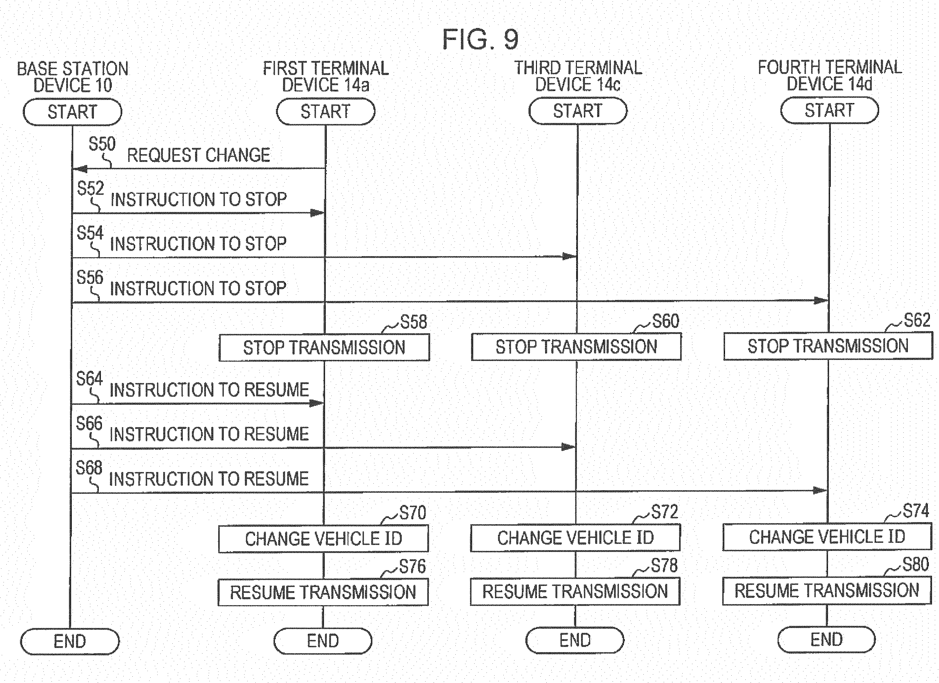

The operations of the communication system 100 according to the above configuration will be described. Fig. 9 is a sequence diagram illustrating change procedures by the communication system 100. In the example illustrated in Fig. 9, the first vehicle 12a, third vehicle 12c, and fourth vehicle 12d are situated within the area 202 illustrated in Fig. 1. This means that the first terminal device 14a, third terminal device 14c, and fourth terminal device 14d can each receive communication packets transmitted from the base station device 10. This also means that the base station device 10 can receive broadcast transmission of communication packets from the first terminal device 14a.

The first terminal device 14a performs broadcast transmission of communication packet containing a change request (S50). The base station device 10 that has received the communication packet containing the change request performs broadcast transmission of the communication packet containing a stop instruction (S52, S54, S56). The first terminal device 14a, third terminal device 14c, and fourth terminal device 14d that have received the communication packet containing the stop instruction from the base station device 10 each stop transmission communication packets (S58, S60, S62). Next, the base station device 10 performs broadcast transmission of a communication packet containing a resume instruction (S64, S66, S68). The first terminal device 14a, third terminal device 14c, and fourth terminal device 14d that have received the communication packet containing the resume instruction from the base station device 10 each change their vehicle IDs (S70, S72, S74), and resume broadcast transmission of communication packets (S76, S78, S80).

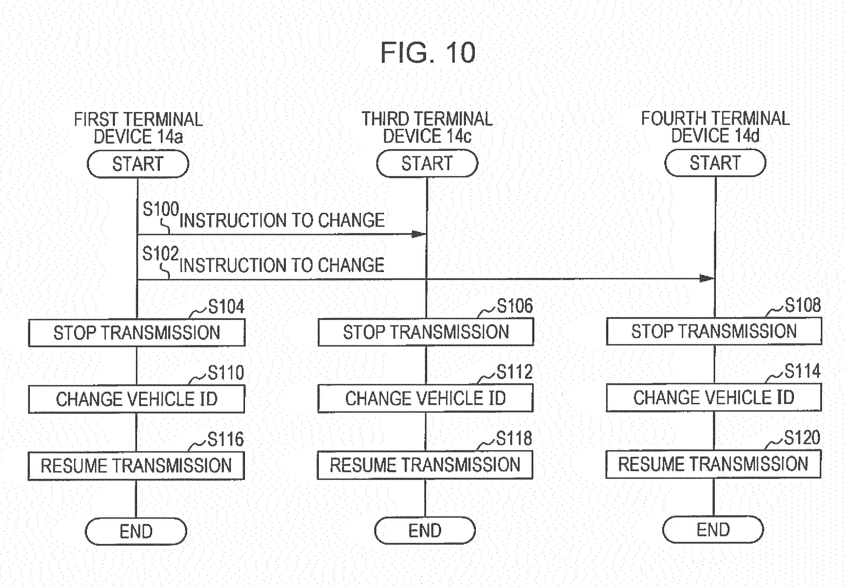

Fig. 10 is a sequence diagram illustrating other changing procedures by the communication system 100. The first terminal device 14a performs broadcast transmission of a communication packet containing a change instruction (S100, S102). After broadcast transmission of the communication packet containing the change instruction, the first terminal device 14a stops transmission of communication packets. The third terminal device 14c and fourth terminal device 14d that have received the communication packet containing the change instruction from the first terminal device 14a stop transmission of communication packets (S104, S106, S108). In a case where resume conditions have been satisfied, the first terminal device 14a, third terminal device 14c, and fourth terminal device 14d each change their vehicle IDs (S110, S112, S114), and resume broadcast transmission of communication packets (S116, S118, S120).

According to the terminal device of the present disclosure, when the vehicle ID of the terminal device installed in the subject vehicle is changed, the vehicle IDs of other terminal devices installed in other vehicles situated around the subject vehicle also are changed, so identifying the terminal device that has changed the vehicle ID can be made difficult. Making identification of the terminal device that has changed the vehicle ID difficult thus makes tracking of the vehicle in which is installed the terminal device according to the present disclosure even more difficult.

The overview of one aspect of the present disclosure will be described. According to one aspect of the present disclosure, a terminal device includes: an acquisition unit that acquires first location information of a subject vehicle in which the terminal device is installed; a transmission unit that transmits a communication packet containing the first location information acquired by the acquisition unit, and identification information for identifying the terminal device; a reception unit that receives a communication packet transmitted from another terminal device installed in another vehicle, the received communication packet containing the second location information of the other vehicle, and acquires the second location information contained in the communication packet; and a notification unit that performs notification of a warning, based on the second location information acquired at the reception unit, and the first location information acquired at the acquisition unit. In a case where stop conditions have been satisfied, the transmission unit stops transmission of the communication packet containing the first location information and the identification information, and even in a case where the stop conditions have been satisfied, the reception unit receives the communication packet transmitted from the other terminal device.

According to this aspect, the terminal device stops transmission of the communication packet containing the first location information and identification information in a case where stop conditions have been satisfied. Accordingly, activities where a terminal device installed in another vehicle tracking the subject vehicle uses information contained in the communication packet transmitted from the terminal device installed in the subject vehicle to track the subject vehicle can be made difficult.

The terminal device may further include a control unit that determines whether or not the stop conditions are satisfied. In a case where the control unit determines that stop conditions have been satisfied, the transmission unit may stop transmission of the communication packet containing the first location information acquired by the acquisition unit and the identification information, after determination that stop conditions have been satisfied. In this case, transmission of the communication packet is stopped after determination that stop conditions have been satisfied, so the first location information acquired by the acquisition can be kept from being notified to other terminal device after determination is made that stop conditions have been satisfied.

In a case where the control unit determines that the stop conditions have been satisfied, the transmission unit may transmit a communication packet containing dummy location information instead of the first location information. In this case, the communication packet containing the dummy location information is transmitted, so the first location information acquired by the acquisition unit can be kept from being notified to other terminal device after determination is made that stop conditions have been satisfied.

After determination that stop conditions have been satisfied, the control unit may further determine whether or not resume conditions have been satisfied. In a case where the control unit determines that resume conditions have been satisfied, the transmission unit may transmit a communication packet containing the first location information acquired by the acquisition unit and the identification information, after determination that resume conditions have been satisfied. In this case, transmission of the communication packet containing the first location information and identification information is resumed in a case where resume conditions have been satisfied, so drive assistance can be executed at another terminal device installed in a vehicle that is different from a vehicle tracking the subject vehicle.

After determination that stop conditions have been satisfied, the control unit may further determine whether or not resume conditions have been satisfied. In a case where the control unit determines that resume conditions have been satisfied, the identification information may be changed. In a case where the control unit determines that resume conditions have been satisfied, the transmission unit may transmit a communication packet containing the first location information acquired by the acquisition unit and the changed identification information, after determination that resume conditions have been satisfied. In this case, the identification information is changed, so the tracking activities of another vehicle tracking the subject vehicle can be made even more difficult.

The transmission unit may transmit a communication packet containing a request to change identification information for identifying the other terminal device. In this case, the identification information is changed at another terminal device that has received the communication packet containing the request to change the identification information as well, so the tracking activities of another vehicle tracking the subject vehicle can be made even more difficult.

The terminal device may further include a generating unit that receives the first location information from the acquisition unit and generates a communication packet containing the received first location information and the identification information, and outputs the generated communication packet to the transmission unit, and a control unit that determines whether or not stop conditions have been satisfied. The transmission unit may transmit the communication packet received from the generating unit. In a case where the control unit determines that stop conditions have been satisfied, the generating unit stops generating the communication packet containing the first location information received from the acquisition unit and the identification information, after determination that stop conditions have been satisfied.

The terminal device may further include memory that stores dummy location information. In a case where the control unit determines that the stop conditions have been satisfied, the acquisition unit may acquire the dummy location information from the memory and output the acquired dummy location information to the generating unit, and the generating unit may generate a communication packet containing the dummy location information received from the acquisition unit, and output the generated communication packet to the transmission unit.

After having determined that stop conditions have been satisfied, the control unit may further determine whether or not resume conditions have been satisfied. In a case where the control unit has determined that the resume conditions have been satisfied, the generating unit may generate a communication packet containing the first location information received from the acquisition unit and the identification information, and output the generated communication packet to the transmission unit, after determination that the resume conditions have been satisfied.

After having determined that stop conditions have been satisfied, the control unit may further determine whether or not resume conditions have been satisfied. In a case where the control unit has determined that the resume conditions have been satisfied, the identification information may be changed, and the generating unit may generate a communication packet containing the first location information received from the acquisition unit and the changed identification information, and output the generated communication packet to the transmission unit, after determination that the resume conditions have been satisfied.

The terminal device may further include a random number generator that generates random numbers. In a case where the control unit determines that resume conditions have been satisfied, the identification information may be changed using a random number generated by the random number generator.

The control unit may include a timer. The control unit may use the timer to time a period elapsed from a start point that is a certain point during the communication packet being transmitted by the transmission unit, and in a case where the period being timed by the timer becomes longer than a period set beforehand, the control unit may determine that the stop conditions have been satisfied.

The control unit may measure a distance of travel from a start point that is a certain point during the communication packet being transmitted by the transmission unit, and in a case where the distance of travel being measured becomes longer than a distance set beforehand, the control unit may determine that the stop conditions have been satisfied.

The control unit may include a timer. In a case where determination is made that the stop conditions have been satisfied, the control unit may use the timer to time a period elapsed from having stopped transmission of the communication packet, and in a case where the elapsed period being timed by the timer becomes longer than a period set beforehand, the control unit may determine that the resume conditions have been satisfied.

In a case where determination is made that the stop conditions have been satisfied, the control unit may measure a distance of travel from having stopped transmission of the communication packet, and in a case where the distance of travel being measured becomes longer than a distance set beforehand, the control unit may determine that the resume conditions have been satisfied.

The transmission unit may perform broadcast transmission of the communication packet.

At least one of the acquisition unit, transmission unit, reception unit, and notification unit may include a processor.

The terminal device according to the present disclosure has been described above by way of embodiments. One skilled in the art will understand that these embodiments are only exemplary and that various modifications can be made by combinations of the components and processing processes thereof, and that such modifications are also encompassed by the scope of the present disclosure.

The following processing may be executed in the first and second embodiments. (1) In a case where the control unit 24 has confirmed that stop conditions have been satisfied, the transmission unit 34 may perform broadcast transmission of the communication packet with reduced transmission power as compared to normal transmission. (2) In a case where the control unit 24 has confirmed that assistance will not be executed at the notification unit 48 within a predetermined amount of time, the second acquisition unit 42 may change the vehicle ID. These modifications can improve the degree of freedom of configuration.

Although the vehicle 12 has been described as being an automobile in the first and second embodiments, this is not restrictive. The vehicle 12 may be other than an automobile, and may be a motorcycle or the like, for example. This modification can improve the degree of freedom of configuration.

In the first and second embodiments, in a case where transmission of the first location information is being stopped, the notification unit 48 may notify the driver that transmission is being stopped (or that drive assistance is being performed in a tracking prevention mode).

The assistance for right-turn collision avoidance in the first and second embodiments are supposed to be applied in left-hand traffic driving system as accustomed in Japan. It is noted that the first and second embodiments may be applied mutatis mutandis to an assistance for left-turn collision avoidance in righthand traffic driving system as accustomed in US. In this case, the terms "right" and "left" will be replaced with each other.

## Claims

1. A terminal device comprising:
an acquisition unit that acquires first location information of a subject vehicle in which the terminal device is installed;
a transmission unit that transmits a communication packet containing the first location information acquired by the acquisition unit, and identification information for identifying the terminal device;
a reception unit that receives a communication packet transmitted from another terminal device installed in another vehicle, the received communication packet containing the second location information of the other vehicle, and acquires the second location information contained in the communication packet; and
a notification unit that performs notification of a warning, based on the second location information acquired at the reception unit, and the first location information acquired at the acquisition unit,
wherein, in a case where stop conditions have been satisfied, the transmission unit stops transmission of the communication packet containing the first location information and the identification information,
and wherein, even in a case where the stop conditions have been satisfied, the reception unit receives the communication packet transmitted from the other terminal device.

2. The terminal device according to Claim 1, further comprising:
a control unit that determines whether or not the stop conditions are satisfied,
wherein, in a case where the control unit determines that stop conditions have been satisfied, the transmission unit stops transmission of the communication packet containing the first location information acquired by the acquisition unit and the identification information, after determination that stop conditions have been satisfied.

3. The terminal device according to Claim 2,
wherein in a case where the control unit determines that the stop conditions have been satisfied, the transmission unit transmits a communication packet containing dummy location information instead of the first location information.

4. The terminal device according to Claim 2,
wherein, after determination that stop conditions have been satisfied, the control unit further determines whether or not resume conditions have been satisfied,
and wherein, in a case where the control unit determines that resume conditions have been satisfied, the transmission unit transmits a communication packet containing the first location information acquired by the acquisition unit and the identification information, after determination that resume conditions have been satisfied.

5. The terminal device according to Claim 2,
wherein, after determination that stop conditions have been satisfied, the control unit further determines whether or not resume conditions have been satisfied,
wherein, in a case where the control unit determines that resume conditions have been satisfied, the identification information is changed,
and wherein, in a case where the control unit determines that resume conditions have been satisfied, the transmission unit transmits a communication packet containing the first location information acquired by the acquisition unit and the changed identification information, after determination that resume conditions have been satisfied.

6. The terminal device according to Claim 5,
wherein the transmission unit transmits a communication packet containing a request to change identification information for identifying the other terminal device.

7. The terminal device according to Claim 1, further comprising:
a generating unit that receives the first location information from the acquisition unit and generates a communication packet containing the received first location information and the identification information, and outputs the generated communication packet to the transmission unit; and
a control unit that determines whether or not stop conditions have been satisfied,
wherein the transmission unit transmits the communication packet received from the generating unit,
and wherein, in a case where the control unit determines that stop conditions have been satisfied, the generating unit stops generating the communication packet containing the first location information received from the acquisition unit and the identification information, after determination that stop conditions have been satisfied.

8. The terminal device according to Claim 7, further comprising:
memory that stores dummy location information,
wherein, in a case where the control unit determines that the stop conditions have been satisfied,
the acquisition unit acquires the dummy location information from the memory and outputs the acquired dummy location information to the generating unit, and
the generating unit generates a communication packet containing the dummy location information received from the acquisition unit, and outputs the generated communication packet to the transmission unit.

9. The terminal device according to Claim 7,
wherein, after having determined that stop conditions have been satisfied, the control unit further determines whether or not resume conditions have been satisfied,
and wherein, in a case where the control unit has determined that the resume conditions have been satisfied, the generating unit generates a communication packet containing the first location information received from the acquisition unit and the identification information, and outputs the generated communication packet to the transmission unit, after determination that the resume conditions have been satisfied.

10. The terminal device according to Claim 7,
wherein, after having determined that stop conditions have been satisfied, the control unit further determines whether or not resume conditions have been satisfied,
and wherein, in a case where the control unit has determined that the resume conditions have been satisfied, the identification information is changed, and the generating unit generates a communication packet containing the first location information received from the acquisition unit and the changed identification information, and outputs the generated communication packet to the transmission unit, after determination that the resume conditions have been satisfied.

11. The terminal device according to Claim 10, further comprising:
a random number generator that generates random numbers,
wherein, in a case where the control unit determines that resume conditions have been satisfied, the identification information is changed using a random number generated by the random number generator.

12. The terminal device according to Claims 2 or 7,
wherein the control unit includes a timer,
and wherein the control unit uses the timer to time a period elapsed from a start point that is a certain point during the communication packet being transmitted by the transmission unit, and in a case where the period being timed by the timer becomes longer than a period set beforehand, the control unit determines that the stop conditions have been satisfied.

13. The terminal device according to Claims 2 or 7,
wherein the control unit measures a distance of travel from a start point that is a certain point during the communication packet being transmitted by the transmission unit, and in a case where the distance of travel being measured becomes longer than a distance set beforehand, the control unit determines that the stop conditions have been satisfied.

14. The terminal device according to Claims 4 or 9,
wherein the control unit includes a timer,
and wherein, in a case where determination is made that the stop conditions have been satisfied, the control unit uses the timer to time a period elapsed from having stopped transmission of the communication packet, and in a case where the elapsed period being timed by the timer becomes longer than a period set beforehand, the control unit determines that the resume conditions have been satisfied.

15. The terminal device according to Claims 4 or 9,
wherein, in a case where determination is made that the stop conditions have been satisfied, the control unit measures a distance of travel from having stopped transmission of the communication packet, and in a case where the distance of travel being measured becomes longer than a distance set beforehand, the control unit determines that the resume conditions have been satisfied.

16. The terminal device according to Claim 1,
wherein the transmission unit performs broadcast transmission of the communication packet.

17. The terminal device according to Claim 1,
wherein at least one of the acquisition unit, transmission unit, reception unit, and notification unit includes a processor.
